# EUROPÄISCHE PATENTSCHRIFT

(11) **EP 2 724 909 B1**
(45) Veröffentlichungstag und Bekanntmachung des Hinweises auf die Patenterteilung: **20.04.2016**
(21) Anmeldenummer: 13004964.6
(22) Anmeldetag: 16.10.2013
(51) Int. Cl.: B60T 8/26, B60W 30/18

(54) **Hydraulische Bremsanlage**
Hydraulic brake system
Installation de freinage hydraulique

(30) Priorität: 24.10.2012 DE 102012020879
(43) Veröffentlichungstag der Anmeldung: 30.04.2014
(73) Patentinhaber: AUDI AG, 85045 Ingolstadt (DE)
(72) Erfinder: Klinger, Thomas, 85057 Ingolstadt (DE)

(56) Entgegenhaltungen:
- EP-A1- 0 376 767
- DE-A1- 2 625 713
- DE-A1-102009 048 785

## Beschreibung

Die Erfindung betrifft eine hydraulische Bremsanlage mit einem an zwei Bremskreisläufe angeschlossenen Tandemhauptbremszylinder mit einem Schwimmkolben und einem Mittel zum Aufteilen von Bremsleistung zwischen den beiden Bremskreisläufen.

Eine solche Bremsanlage ist aus FR 0376767 A bekannt.

Die hydraulische Bremsanlage ist insbesondere für ein Kraftfahrzeug vorgesehen, das wenigstens eine elektrische Maschine aufweist. Mithin kann es sich dabei um ein reines Elektrofahrzeug oder um ein Hybridfahrzeug handeln, das sowohl einen Verbrennungsmotor als auch eine elektrische Maschine aufweist.

Die elektrische Maschine wird dabei so gesteuert, dass während eines Bremsvorgangs durch Rekuperation Energie wiedergewonnen werden kann, die in einer Batterie oder in einem anderen Speicher gespeichert und zu einem späteren Zeitpunkt zum Antrieb einer Fahrzeugsachse oder für elektrische Verbraucher verwendet werden kann.

Es wird angestrebt, dass diejenige Achse, an der sich die elektrische Maschine befindet, während eines Bremsvorgangs maximal rekuperieren soll. Das bedeutet, dass eine mechanische, insbesondere hydraulische Bremsanlage, die parallel zur elektrischen Maschine geschaltet ist, in diesem Betriebszustand möglichst wenig bremsen soll, damit ein möglichst großer Ahteil der Bremsenergie in elektrische Energie umgewandelt wird. Aus verschiedenen Gründen ist jedoch die Rekuperationsleistung des aus der elektrischen Maschine und dem angeschlossenen Energiespeicher bestehenden Systems veränderlich. Die Rekuperationsleistung hängt beispielsweise vom Ladezustand der Batterie oder der Temperatur der elektrischen Maschine ab. Die Bremseinlage muss daher "blendingfähig" sein, d. h., die Bremsleistung muss zwischen der hydraulischen Bremsanlage und der durch Rekuperation erzeugten Bremsleistung aufteilbar sein.

Aus der DE 10 2009.048 785 A1 ist ein Kraftfahrzeug mit einem Hybridantrieb bekannt, das eine elektrische Maschine zum Rekuperieren von Energie aufweist. Die hydraulische Bremsanlage weist eine Druckminderungsventileinrichtung auf, um in der Rekuperationsphase den von der hydraulischen Bremsanlage erzeugten Druck zu verringern.

Es ist auch bekannt, einen Bremskraftverstärker und gegebenenfalls ein Hydroaggregat, d. h. einen Block mit Ventilen und einer Pumpe zu verwenden, um eine blendingfähige Bremsanlage zu erhalten. Es ist jedoch schwierig, diese Komponenten so auszulegen, dass ein Blendingvorgang vom Fahrer nicht bemerkt wird. Dazu ist es erforderlich, dass sich Pedalkraft und Pedalweg bei einer Rekuperation wie bei einem herkömmlichen Bremsvorgang verhalten.

Der Erfindung liegt daher die Aufgabe zugrunde, eine blendingfähige Bremsanlage anzugeben, wobei eine veränderte Aufteilung der Bremsleistung vom Fahrer nicht wahrnehmbar sein soll.

Zur Lösung dieser Aufgabe ist bei einer hydraulischen Bremsanlage der eingangs genannten Art erfindungsgemäß vorgesehen, dass das Mittel zum Aufteilen der Bremsleistung zum Positionieren des Schwimmkolbens ausgebildet ist, um eine bestimmte Bremskraftaufteilung einzustellen.

Die Erfindung beruht auf der Erkenntnis, dass mittels eines ansteuerbaren Schwimmkolbens unmittelbar auf die Bremskraftverteilung zwischen den beiden Bremskreisläufen Einfluss genommen werden kann. Dementsprechend kann die Bremskraft während der Rekuperation z. B. so aufgeteilt werden, dass ein unerwünschtes Überbremsen derjenigen Achse, an der sich die elektrische Maschine befindet, vermieden wird. Dazu wird der Schwimmkolben lediglich soweit verschoben, dass die Verschiebung der gewünschten Druckdifferenz entspricht. Erfindungsgemäß erfolgt somit eine Steuerung der Position des Schwimmkolbens.

Eine Variante der Erfindung kann vorsehen, dass das Mittel einen Schwimmkolben aus einem magnetischen Material aufweist, der durch ein von einer Spule erzeugtes Magnetfeld verschiebbar ist. Mittels der Spule kann durch Anlegen eines Stroms ein magnetisches Feld erzeugt werden, das eine Kraft auf das magnetische Material ausübt, wodurch der Schwimmkolben in der gewünschten Richtung verschoben wird. Es ist auch möglich, durch eine Umkehrung des Magnetfelds den Schwimmkolben wieder in die Ausgangslage zu verschieben. Durch eine Änderung der Stärke des Magnetfelds kann gegebenenfalls auch der Verschiebeweg des Schwimmkolbens gesteuert werden. Eine Rückführung des Schwimmkolbens aus einer ausgelenkten Position in seine Ursprungsposition kann jedoch auch mittels einer Rückstellfeder bewirkt werden.

Es liegt auch im Rahmen der Erfindung, dass die Spule so angeordnet ist, dass sich eine festgelegte Verschiebung des Schwimmkolbens und dadurch ein festgelegter Verschiebeweg ergibt, der durch eine Anpassung der Länge der Spule angepasst werden kann.

Die Stärke des Magnetfelds kann auch durch eine Steuerungseinrichtung beeinflusst werden, um durch unterschiedlich starke Magnetfelder unterschiedliche Verschiebungen des Schwimmkolbens und damit unterschiedlicher Druckunterschiede in dem Tandemhauptbremszylinder zu erzeugen.

Eine alternative Ausgestaltung der Erfindung sieht vor, dass der Schwimmkolben einen aus dem Druckraum herausragenden Endabschnitt aufweist, an dem ein steuerbarer Aktuator zum Einstellen eines festgelegten Druckunterschieds angeschlossen ist. Der Aktuator ist mit dem Schwimmkolben gekoppelt und verschiebt diesen, wodurch sich ein bestimmter Druckunterschied in den beiden an den Tandemhauptbremszylinder angeschlossenen Bremskreisläufen ergibt.

Erfindungsgemäß wird es bevorzugt, dass der steuerbare Aktuator als elektromagnetischer Aktuator oder als Elektromotor, gegebenenfalls mit einer Untersetzung ausgebildet ist. Mittels des steuerbaren Aktuator kann die Bremskraft zwischen den beiden Bremskreisläufen beeinflusst und aufgeteilt werden.

Die Erfindung wird nachfolgend anhand von Ausführungsbeispielen unter Bezugnahme auf die Zeichnungen erläutert.
- Fig.1: ist eine schematische Darstellung eines ersten Ausführungsbeispiels eines Kraftfahrzeugs mit einer erfindungsgemäßen hydraulischen Bremsanlage; und
- Fig. 2: ist eine schematische Darstellung eines zweiten Ausführungsbeispiels eines Kraftfahrzeugs mit einer erfindungsgemäßen hydraulischen Bremsanlage.

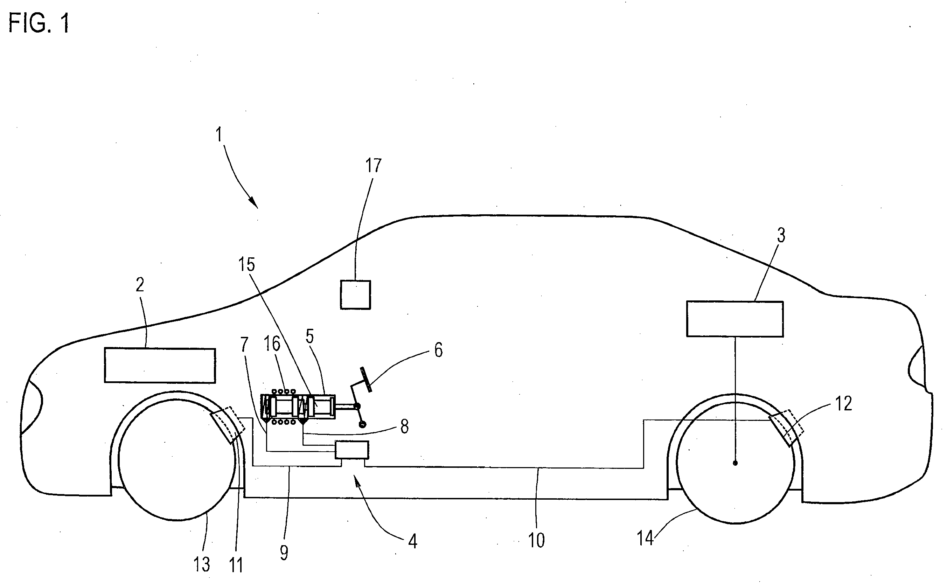

Das in der Fig. 1 gezeigte Kraftfahrzeug 1 umfasst einen Motor 2 und eine elektrische Maschine 3. Die elektrische Maschine 3 kann wahlweise zum Antreiben eines Rads oder der Räder einer Achse betrieben werden, alternativ kann die elektrische Maschine 3 auch zur Rekuperation von Energie als Generator betrieben werden. Während der Rekuperation erzeugt die elektrische Maschine 3 Strom, der in einem Energiespeicher gespeichert und zu einem späteren Zeitpunkt für den Antrieb eines Rads oder einer Achse des Kraftfahrzeugs 1 oder für elektrische Verbraucher verwendet werden kann.

Das Kraftfahrzeug 1 umfasst eine hydraulische Bremsanlage 4 mit einem Tandemhauptbremszylinder 5. Ein Bremspedal 6 ist mit dem Tandemhauptbremszylinder 5 unmittelbar oder über einen Bremskraftverstärker verbunden, bei einer Betätigung des Bremspedals 6 werden zwei Druckkolben im Inneren des Tandemhauptbremszylinders 5 verschoben, wodurch ein hydraulischer Druck in Hydraulikleitungen 7, 8 erzeugt wird. Hydraulikleitungen 9, 10 münden jeweils in einem Bremssattel 11, 12, ein in dem Bremssattel 11, 12 integrierter Zylinder wird durch den hydraulischen Druck verschoben, wodurch Bremsbeläge gegen eine Bremsscheibe eines Rads 13, 14 gepresst werden. Insgesamt sind vier Hydraulikleitungen 9, 10 vorhanden, wobei jede Hydraulikleitung einem Rad zugeordnet ist.

Ein Schwimmkolben 15 in dem Tandemhauptbremszylinder 5 ist aus einem magnetischen Material hergestellt. Der Tandemhauptbremszylinder 5 ist von einer Spule 16 umgeben, mittels einer Steuerungseinrichtung 17 wird eine Spannung an die Spule 16 angelegt, wodurch ein Magnetfeld entsteht, das auf den Schwimmkolben 15 eine Kraft ausübt. Unter dem Einfluss des Magnetfelds verschiebt sich der Schwimmkolben 15, wodurch der Druck in den Hydraulikleitungen 7, 8 geändert wird, dementsprechend ändert sich auch die auf die Räder 13, 14 einwirkende Bremskraft.

Bei einer Rekuperation wird durch die Steuerungseinrichtung 17 das Magnetfeld erzeugt, die Größe und Richtung der Verschiebung ist dabei so gewählt, dass die Hinterachse bzw. das hintere Rad 14 weniger stark abgebremst wird als die installierte Bremskraftverteilung vorsieht, da während der Rekuperation auch die als Generator betriebene elektrische Maschine 3 ein entsprechendes Bremsmoment bzw. Rekuperationsmoment erzeugt. Daneben sind andere Ausführungsbeispiele denkbar, bei denen die Abbremsung der Vorderachse geändert wird.

Nach dem Ende der Rekuperation wird die Spule 16 abgeschaltet, sodass der Schwimmkolben 15 unter dem Einfluss einer Rückstellfeder (nicht gezeigt) in seine Ausgangslage zurückkehrt.

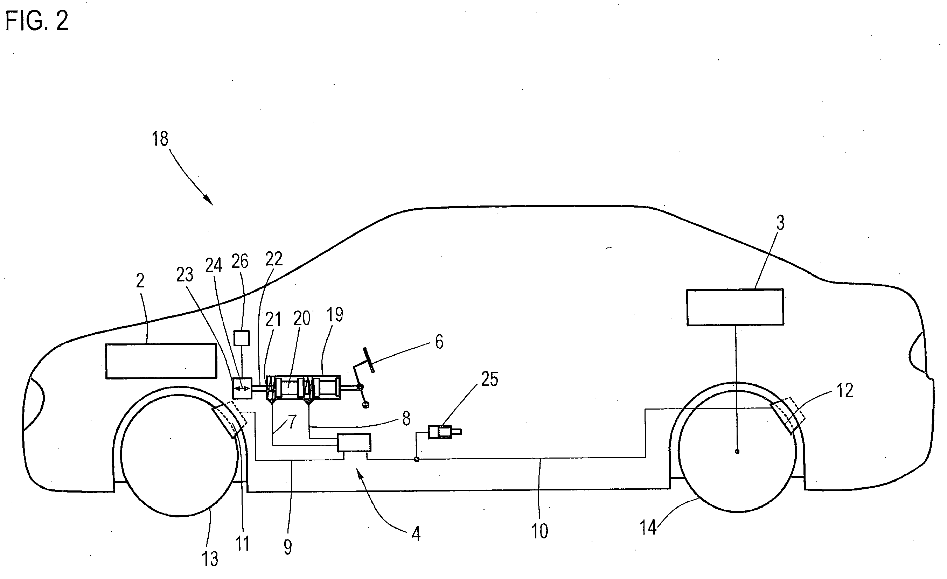

Fig. 2 zeigt ein zweite Ausführungsbeispiel der Erfindung, wobei übereinstimmende Komponenten mit denselben Bezugszeichen wie in Fig. 1 bezeichnet sind. Auf eine nochmalige detaillierte Beschreibung der übereinstimmenden Bauteile wird verzichtet.

Das in Fig. 2 gezeigte Kraftfahrzeug 18 weist einen Tandemhauptbremszylinder 19 auf, dessen Schwimmkolben 20 verlängert ist, sodass er aus dem Druckraum herausragt. Das Gehäuse des Tandemhauptbremszylinders 19 ist dazu mit einer Abdichtung 21 versehen. Ein Endabschnitt 22 des Tandemhauptbremszylinders 19 ist mit einem Aktuator 23 gekoppelt, der in dem dargestellten Ausführungsbeispiel als elektromagnetischer Aktuator ausgebildet ist. Der Doppelpfeil 24 zeigt die Bewegungsrichtung des Aktuators 23 an, der in der Lage ist, den Schwimmkolben 20 axial zu bewegen. Der Aktuator 23 wird durch eine Steuerungseinrichtung 26 gesteuert, während der Rekuperation steuert die Steuerungseinrichtung 26 den Aktuator 23 so, dass der Druck in den Hydraulikleitungen 7, 8 so geändert wird, dass das an der rekuperierenden Achse (Hinterachse) angeordnete Rad 14 weniger stark hydraulisch gebremst wird.

Mittels des ansteuerbaren Schwimmkolbens 20 kann unmittelbar auf die Bremskraftverteilung zwischen den beiden Bremskreisläufen Einfluss genommen werden. Der Aktuator 23 verschiebt den Schwimmkolben 20 dabei soweit, wie es der gewünschten Druckdifferenz entspricht.

Zusätzlich ist in dem hydraulischen Bremskreislauf ein Kolben 25 als Mittel zur Beeinflussung des Volumens der Bremsflüssigkeit vorgesehen. Dadurch kann verhindert werden, dass sich die Stellung des Bremspedals 6 oder der Pedalweg ändert.

Bei den in den Fig. 1 und 2 gezeigten Ausführungsbeispielen wird der Tandemhauptbremszylinder 5, 19 jeweils so gesteuert, dass die Summe der durch Rekuperation und das hydraulische Bremssystem aufgebrachten Bremsleistungen konstant bleibt. Mittels des steuerbaren Schwimmkolbens 15, 20 sind beliebige Rekuperationgrade möglich, ohne dass sich die Bremskraftverteilung ändert. Das Ziel ist außerdem, dass der Fahrer einen Rekuperationsvorgang anhand des Bremspedals oder an einer Fahrzeugreaktion erkennen kann.

Neben dieser bevorzugten Ansteuerung kann es auch das Ziel sein, andere Bremskraftverteilungen einzustellen je nach Fahrsituation.

## Patentansprüche

1. Hydraulische Bremsanlage mit einem an zwei Bremskreisläufe angeschlossenen Tandemhauptbremszylinder mit einem Schwimmkolben und einem Mittel zum Aufteilen von Bremsleistung zwischen den beiden Bremskreisläufen,
**dadurch gekennzeichnet,**
**dass** das Mittel zum Aufteilen der Bremsleistung zum Positionieren des Schwimmkolbens (15, 20) ausgebildet ist, um eine bestimmte Bremskraftaufteilung einzustellen.

2. Hydraulische Bremsanlage nach Anspruch 1,
**dadurch gekennzeichnet,**
**dass** das Mittel einen Schwimmkolben (15) aus einem Material aufweist, der durch ein von einer Spule (16) erzeugtes Magnetfeld oder durch Einschalten eines Magneten verschiebbar ist.

3. Hydraulische Bremsanlage nach Anspruch 2,
**dadurch gekennzeichnet,**
**dass** die Spule (16) um den Druckraum des Tandemhauptbremszylinders (5) herum angeordnet ist.

4. Hydraulische Bremsanlage nach Anspruch 2 oder 3, **dadurch gekennzeichnet,**
**dass** die Stärke des Magnetfelds so gewählt ist, dass sich eine festgelegte Verschiebung des Schwimmkolbens (15) und dadurch ein festgelegter Druckunterschied ergibt.

5. Hydraulische Bremsanlage nach einem der Ansprüche 2 bis 4,
**dadurch gekennzeichnet,**
**dass** die Spule (16) so angeordnet ist, dass sich eine festgelegte Verschiebung des Schwimmkolbens (15) und dadurch ein festgelegter Druckunterschied ergibt.

6. Hydraulische Bremsanlage nach einem der vorangehenden Ansprüche, **dadurch gekennzeichnet,**
**dass** der Schwimmkolben (20) einen aus dem Druckraum heraus ragenden Endabschnitt (22) aufweist, an den ein steuerbarer Aktuator (23) zum Einstellen eines festgelegten Druckunterschieds angeschlossen ist.

7. Hydraulische Bremsanlage nach Anspruch 6,
**dadurch gekennzeichnet,**
**dass** der steuerbare Aktuator (23) als elektromagnetischer Aktuator oder als Elektromotor, gegebenenfalls mit einer Untersetzung, ausgebildet ist.

8. Kraftfahrzeug,
**dadurch gekennzeichnet,**
**dass** es eine hydraulische Bremsanlage nach einem der Ansprüche 1 bis 7 aufweist.

9. Hydraulische Bremsanlage nach Anspruch 1,
**dadurch gekennzeichnet,**
**dass** der Schwimmkolben durch hydraulische, pneumatische oder mechanische Kraftübertragung verschoben wird.

## Claims

1. Hydraulic brake system, having a tandem master brake cylinder which is connected to two brake circuits and comprises a float piston, and a means for distributing brake power between the two brake circuits, **characterised in that** the means for distributing brake power is configured to position the float piston (15, 20) in order to adjust a specific brake power distribution.

2. Hydraulic brake system according to claim 1, **characterised in that** the means comprises a float piston (15) made of a material which is displaceable by a magnetic field generated by a coil (16) or by activating a magnet.

3. Hydraulic brake system according to claim 2, **characterised in that** the coil (16) is arranged around the pressure chamber of the tandem master brake cylinder (5).

4. Hydraulic brake system according to claim 2 or 3, **characterised in that** the strength of the magnetic field is selected so as to cause a defined displacement of the float piston (15) resulting in a defined pressure differential.

5. Hydraulic brake system according to one of claims 2 to 4, **characterised in that** the coil (16) is arranged so as to cause a defined displacement of the float piston (15) resulting in a defined pressure differential.

6. Hydraulic brake system according to one of the preceding claims, **characterised in that** the float piston (20) has an end section (22) which protrudes out of the pressure chamber, and to which is connected a controllable actuator (23) for setting a defined pressure differential.

7. Hydraulic brake system according to claim 6, **characterised in that** the controllable actuator (23) is constructed as an electromagnetic actuator or as an electric motor, optionally having a reduction gear.

8. Motor vehicle, **characterised in that** it comprises a hydraulic brake system according to one of claims 1 to 7.

9. Hydraulic brake system according to claim 1, **characterised in that** the float piston is displaced by hydraulic, pneumatic or mechanical force transmission.

## Revendications

1. Installation de freinage hydraulique comprenant un maître-cylindre de frein tandem raccordé à deux circuits de frein avec un piston flottant et un moyen permettant de répartir la puissance de freinage entre les deux circuits de frein, **caractérisée en ce que** :
le moyen permettant de répartir la puissance de freinage est conçu pour positionner le piston flottant (15, 20) en sorte de régler une répartition déterminée de la puissance de freinage.

2. Installation de freinage hydraulique selon la revendication 1,
**caractérisée en ce que** :
le moyen présente un piston flottant (15) constitué d'un matériau qui peut être déplacé par un champ magnétique produit par une bobine (16) ou par connexion d'un aimant.

3. Installation de freinage hydraulique selon la revendication 2,
**caractérisée en ce que** :
la bobine (16) est aménagée autour de la chambre de compression du maître-cylindre de frein tandem (5).

4. Installation de freinage hydraulique selon la revendication 2 ou la revendication 3, **caractérisée en ce que** :
l'intensité du champ magnétique est choisie de sorte que l'on obtienne un déplacement déterminé du piston flottant (15) et, par suite, une différence de pression déterminée.

5. Installation de freinage hydraulique selon l'une quelconque des revendications 2 à 4,
**caractérisée en ce que** :
la bobine (16) est aménagée de sorte que l'on obtienne un déplacement déterminé du piston flottant (16) et, par suite, une différence de pression déterminée.

6. Installation de freinage hydraulique selon l'une quelconque des revendications précédentes, **caractérisée en ce que** :
le piston flottant (20) présente une section d'extrémité (22) dépassant de la chambre de compression à laquelle est raccordé un actionneur réglable (23) pour régler une différence de pression déterminée.

7. Installation de freinage hydraulique selon la revendication 6,
**caractérisée en ce que** :
l'actionneur réglable (23) se présente sous la forme d'un actionneur électromagnétique ou d'un moteur électrique, éventuellement avec un système de démultiplication.

8. Véhicule automobile,
**caractérisé en ce que** :
il présente une installation de freinage hydraulique selon l'une quelconque des revendications 1 à 7.

9. Installation de freinage hydraulique selon la revendication 1,
**caractérisée en ce que** :
le piston flottant est déplacé par transmission de force hydraulique, pneumatique ou mécanique.
